# FASCICULE DE BREVET EUROPEEN

(11) **EP 1 006 019 B1**
(45) Date de publication et mention de la délivrance du brevet: **20.09.2006**
(21) Numéro de dépôt: 99402967.6
(22) Date de dépôt: 29.11.1999
(51) Int. Cl.: B60Q 1/14

(54) **Dispositif de contrôle du fonctionnement d'au moins un organe fonctionnel d'un véhicule automobile**
Vorrichtung zur Funktionskontrolle wenigstens einer Funktionseinheit eines Kraftfahrzeugs
Device for monitoring the operation of at least one motor vehicle functional element

(30) Priorité: 02.12.1998 FR 9815235
(43) Date de publication de la demande: 07.06.2000
(73) Titulaire: AUTOMOBILES PEUGEOT, 75116 Paris (FR); AUTOMOBILES CITROEN, 92200 Neuilly-sur-Seine (FR)
(72) Inventeur: Loth, Siri Yuth, 95350 Saint Brice sous Forêt (FR)
(74) Mandataire: Habasque, Etienne J. Jean-François

(56) Documents cités:
- EP-A- 0 492 324
- US-A- 5 451 822
- US-A- 5 666 028

## Description

La présente invention concerne un dispositif de contrôle du fonctionnement d'au moins un organe fonctionnel d'un véhicule automobile, à partir d'une information relative à la luminosité dans l'environnement de celui-ci.

On connaît déjà dans l'état de la technique, des dispositifs de ce type qui comportent au moins un capteur de luminosité associé à des moyens d'analyse de signaux de sortie de celui-ci, pour contrôler le fonctionnement d'un organe fonctionnel.

C'est ainsi par exemple que de tels dispositifs sont utilisés dans l'état de la technique pour contrôler l'allumage/extinction des feux du véhicule et le fonctionnement des moyens de ventilation/climatisation de l'habitacle du véhicule.

Les documents DE19523262, EP492324 et DE10163356 en sont des exemples.

En règle générale, ce fonctionnement est piloté à partir d'informations relatives à la luminosité instantanée dans l'environnement du véhicule.

On conçoit cependant que l'utilisation d'un tel paramètre présente un certain nombre d'inconvénients, car il peut se traduire par des commandes inadaptées de l'organe fonctionnel.

Le but de l'invention est donc de résoudre ces problèmes.

A cet effet, l'invention a pour objet un dispositif de contrôle du fonctionnement d'au moins un organe fonctionnel d'un véhicule automobile, à partir d'une information relative à la luminosité dans l'environnement de celui-ci, comportant au moins un capteur dé luminosité associé à des moyens d'analyse de signaux de sortie de celui-ci pour contrôler le fonctionnement de l'organe fonctionnel, caractérisé en ce que les moyens d'analyse comprennent :
- des moyens d'acquisition périodique d'informations de luminosité instantanée en sortie du capteur,
- des moyens de calcul de valeurs de luminosité immédiate par calcul de la moyenne sur une première période de temps, des valeurs de luminosité instantanée comprises dans une première plage de variation déterminée,
- des moyens de calcul de valeurs de luminosité ambiante immédiate par calcul de la moyenne sur une seconde période de temps, des valeurs de luminosité immédiate comprises dans une seconde plage de variation déterminée,
- des moyens de calcul de valeurs de luminosité ambiante naturelle par calcul de la moyenne de n premières valeurs de luminosité ambiante immédiate, comprises dans une troisième plage de variation déterminée, sur une troisième période de temps maximale, et
- des moyens de contrôle du fonctionnement de l'organe fonctionnel à partir de ces valeurs de luminosité ambiante naturelle.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un dispositif de contrôle selon l'invention; et
- la Fig.2 représente un exemple d'organigramme illustrant le fonctionnement d'un tel dispositif.

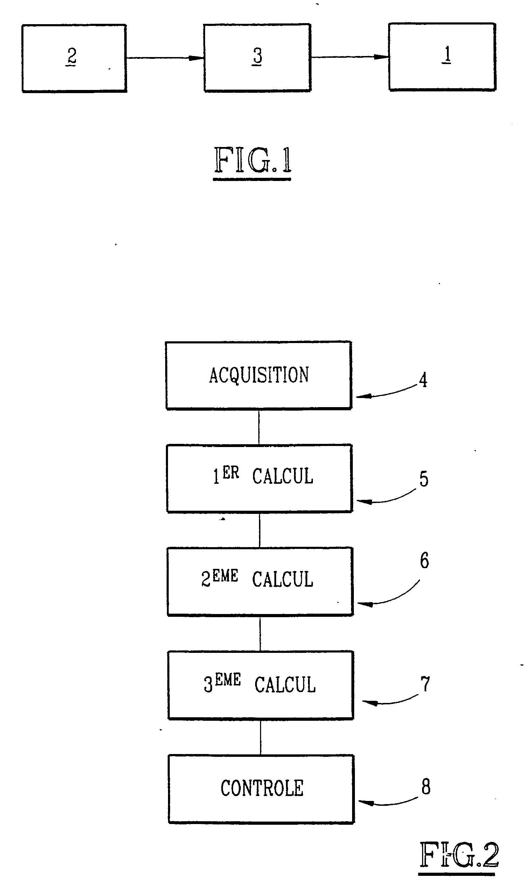

On a en effet représenté sur la figure 1, un dispositif de contrôle du fonctionnement d'au moins un organe fonctionnel d'un véhicule automobile, désigné par la référence générale 1 sur cette figure, à partir d'une information relative à la luminosité dans l'environnement de celui-ci, comportant au moins un capteur de luminosité désigné par la référence générale 2, associé à des moyens d'analyse 3 des signaux de sortie de celui-ci pour contrôler le fonctionnement de l'organe fonctionnel.

Ces moyens d'analyse 3 comprennent par exemple une unité centrale de traitement d'informations adaptée pour réaliser un certain nombre de fonctions d'acquisition d'informations et de calculs de paramètres afin de piloter le fonctionnement de l'organe fonctionnel.

Les différents moyens permettant de réaliser ces différentes fonctions sont illustrés sous la forme de blocs sur la figure 2.

C'est ainsi par exemple que ces moyens d'analyse comprennent :
- des moyens 4 d'acquisition périodique d'informations de luminosité instantanée en sortie du capteur 2, par exemple toutes les 200 ms,
- des moyens 5 de calcul de valeurs de luminosité immédiate, par calcul de la moyenne sur une première période de temps, égale à environ 1 seconde, des valeurs de luminosité instantanée comprises dans une première plage de variation déterminée, égale par exemple à environ 50 Lux,
- des moyens 6 de calcul de valeurs de luminosité ambiante immédiate, par calcul de la moyenne sur une seconde période de temps, égale à environ 3 secondes, des valeurs de luminosité immédiate, comprises dans une seconde plage de variation déterminée, égale par exemple à environ 50 Lux,
- des moyens 7 de calcul de valeurs de luminosité ambiante naturelle par calcul de la moyenne de n premières valeurs de luminosité ambiante immédiate, n étant par exemple égal à 10, comprises dans une troisième plage de variation déterminée, égale par exemple à 50 Lux, sur une troisième période de temps maximale, égale par exemple à environ 60 secondes, et
- des moyens 8 de contrôle du fonctionnement de l'organe fonctionnel à partir de ces valeurs de luminosité ambiante naturelle.

On conçoit alors que le contrôle du fonctionnement de l'organe fonctionnel à partir de ces valeurs de luminosité ambiante naturelle, déterminées comme cela a été expliqué précédemment, permet d'optimiser le fonctionnement de celui-ci.

Cet organe fonctionnel peut comme cela a été indiqué précédemment être constitué par un système de ventilation/climatisation du véhicule ou encore un système d'allumage automatique de feux de celui-ci.

Il va de soi bien entendu que d'autres modes de réalisation encore d'un tel dispositif peuvent être envisagés.

## Revendications

1. Dispositif de contrôle du fonctionnement d'au moins un organe fonctionnel d'un véhicule automobile, à partir d'une information relative à la luminosité dans l'environnement de celui-ci, comportant au moins un capteur de luminosité (2) associé à des moyens d'analyse (3) de signaux de sortie de celui-ci pour contrôler le fonctionnement de l'organe fonctionnel (1), **caractérisé en ce que** les moyens d'analyse comprennent :
- des moyens (4) d'acquisition périodique d'informations de luminosité instantanée en sortie du capteur (2),
- des moyens (5) de calcul de valeurs de luminosité immédiate par calcul de la moyenne sur une première période de temps, des valeurs de luminosité instantanée comprises dans une première plage de variation déterminée,
- des moyens (6) de calcul de valeurs de luminosité ambiante immédiate par calcul de la moyenne sur une seconde période de temps, des valeurs de luminosité immédiate comprises dans une seconde plage de variation déterminée,
- des moyens (7) de calcul de valeurs de luminosité ambiante naturelle par calcul de la moyenne de n premières valeurs de luminosité ambiante immédiate, comprises dans une troisième plage de variation déterminée, sur une troisième période de temps maximale, et
- des moyens (8) de contrôle du fonctionnement de l'organe fonctionnel à partir de ces valeurs de luminosité ambiante naturelle.

2. Dispositif selon la revendication 1, **caractérisé en ce que** les première, seconde et troisième plages de variation déterminées sont égales à 50 Lux.

3. Dispositif selon la revendication 1 ou 2, **caractérisé en ce que** n est égal à 10.

4. Dispositif selon l'une quelconque des revendications précédentes, **caractérisé en ce que** les informations de luminosité instantanée sont acquises toutes les 200 ms environ.

5. Dispositif selon l'une quelconque des revendications précédentes, **caractérisé en ce que** la première période de temps est égale à 1 seconde environ.

6. Dispositif selon l'une quelconque des revendications précédentes, **caractérisé en ce que** la seconde période de temps est égale à 3 secondes environ.

7. Dispositif selon l'une quelconque des revendications précédentes, **caractérisé en ce que** la troisième période de temps est égale à 60 secondes environ.

8. Dispositif selon l'une quelconque des revendications précédentes, **caractérisé en ce que** l'organe fonctionnel (1) est un système de ventilation/climatisation du véhicule.

9. Dispositif selon l'une quelconque des revendications 1 à 7, **caractérisé en ce que** l'organe fonctionnel (1) est un système d'allumage automatique de feux du véhicule.

## Claims

1. Device for controlling the operation of at least one functional component of a motor vehicle, on the basis of information relating to the luminosity in the environment thereof, comprising at least one luminosity sensor (2) associated with means (3) for analysing output signals therefrom to control the operation of the functional component (1), **characterised in that** the analysing means comprise:
means (4) for periodically acquiring instantaneous luminosity information at the output from the sensor (2),
means (5) for calculating immediate luminosity values by calculating the average, over a first period of time, of the instantaneous luminosity values contained within a first specified range of variation,
means (6) for calculating immediate ambient luminosity values by calculating the average, over a second period of time, of the immediate luminosity values contained within a second specified range of variation,
means (7) for calculating natural ambient luminosity values by calculating the average of n first immediate ambient luminosity values contained within a third specified range of variation, over a third maximum period of time, and
means (8) for controlling the operation of the functional component on the basis of these natural ambient luminosity values.

2. Device according to claim 1, **characterised in that** the first, second and third specified ranges of variation are equal to 50 Lux.

3. Device according to claim 1 or 2, **characterised in that** n is equal to 10.

4. Device according to any one of the preceding claims, **characterised in that** the instant luminosity data are acquired approximately every 200 ms.

5. Device according to any one of the preceding claims, **characterised in that** the first period of time is equal to about 1 second,

6. Device according to any one of the preceding claims, **characterised in that** the second period of time is equal to about 3 seconds.

7. Device according to any one of the preceding claims, **characterised in that** the third period of time is equal to about 60 seconds.

8. Device according to any one of the preceding claims, **characterised in that** the functional component (1) is a ventilation/air-conditioning system for the vehicle.

9. Device according to any one of claims 1 to 7, **characterised in that** the functional component (1) is a system for automatically switching on the vehicle's headlamps.

## Patentansprüche

1. Vorrichtung für die Steuerung der Funktion wenigstens eines funktionalen Organs eines Kraftfahrzeugs anhand einer Information bezüglich der Helligkeit in dessen Umgebung, mit wenigstens einem Lichtsensor (2), dem Analysemittel (3) für seine Ausgangssignale zugeordnet sind, um die Funktion des funktionalen Organs (1) zu steuern, **dadurch gekennzeichnet, dass** die Analysemittel umfassen:
- Mittel (4) zum periodischen Erfassen von Informationen bezüglich der momentanen Helligkeit am Ausgang des Sensors (2),
- Mittel (5) zum Berechnen von Werten der unmittelbaren Helligkeit durch Berechnen des Mittelwerts von momentanen Helligkeitswerten, die in einem bestimmten ersten Veränderungsbereich enthalten sind, über eine erste Zeitdauer,
- Mittel (6) zum Berechnen von Werten der unmittelbaren Umgebungshelligkeit durch Berechnen des Mittelwerts von momentanen Helligkeitswerten, die in einem bestimmten zweiten Veränderungsbereich enthalten sind, über eine zweite Zeitdauer,
- Mittel (7) zum Berechnen von Werten der natürlichen Umgebungshelligkeit durch Berechnen des Mittelwerts von n ersten Werten der unmittelbaren Umgebungshelligkeit, die in einem bestimmten dritten Veränderungsbereich enthalten sind, über eine dritte, maximale Zeitdauer und
- Mittel (8) für die Steuerung der Funktion des funktionalen Organs anhand dieser Werte der natürlichen Umgebungshelligkeit.

2. Vorrichtung nach Anspruch 1, **dadurch gekennzeichnet, dass** der erste, der zweite und der dritte bestimmte Veränderungsbereich gleich 50 Lux sind.

3. Vorrichtung nach Anspruch 1 oder 2, **dadurch gekennzeichnet, dass** n gleich 10 ist.

4. Vorrichtung nach einem der vorhergehenden Ansprüche, **dadurch gekennzeichnet, dass** die Informationen über die momentane Helligkeit etwa alle 200 ms erfasst werden.

5. Vorrichtung nach einem der vorhergehenden Ansprüche, **dadurch gekennzeichnet, dass** die erste Zeitdauer gleich etwa 1 Sekunde ist.

6. Vorrichtung nach einem der vorhergehenden Ansprüche, **dadurch gekennzeichnet, dass** die zweite Zeitdauer gleich etwa 3 Sekunden ist.

7. Vorrichtung nach einem der vorhergehenden Ansprüche, **dadurch gekennzeichnet, dass** die dritte Zeitdauer gleich etwa 60 Sekunden ist.

8. Vorrichtung nach einem der vorhergehenden Ansprüche, **dadurch gekennzeichnet, dass** das funktionale Organ (1) ein Lüftungs-/Klimatisierungs-System des Fahrzeugs ist.

9. Vorrichtung nach einem der Ansprüche 1 bis 7, **dadurch gekennzeichnet, dass** das funktionale Organ (1) ein System zum automatischen Einschalten der Fahrzeugscheinwerfer ist.
